# EUROPEAN PATENT SPECIFICATION

(11) **EP 1 825 759 B1**
(45) Date of publication and mention of the grant of the patent: **18.09.2013**
(21) Application number: 05806882.6
(22) Date of filing: 18.11.2005
(51) Int. Cl.: A23C 13/00, A23C 13/14, A23D 7/00

(54) **CREAM AND PROCESSED CREAM PRODUCTS HAVING EXCELLENT FLAVOR AND PHYSICAL PROPERTIES AND METHOD OF PRODUCING THE SAME**
SAHNE UND VERARBEITETE SAHNEPRODUKTE MIT HERVORRAGENDEM GESCHMACK UND PHYSIKALISCHEN EIGENSCHAFTEN UND HERSTELLUNGSVERFAHREN DAFÜR
CREME ET PRODUITS CONTENANT DE LA CREME TRANSFORMEE AU GOUT ET PROPRIETES PHYSIQUES EXCELLENTS, ET PROCEDE DE PREPARATION

(30) Priority: 19.11.2004 JP 2004335455
(43) Date of publication of application: 29.08.2007
(60) Divisional application: 10000948.9
(73) Proprietor: Meiji Co., Ltd., Tokyo (JP)
(72) Inventor: KOMATSU, Yoshinori c/o Division of Research and Development, 540, Naruda Odawara-Shi, Kanagawa (JP); TAMAI, Shigeru c/o Division of Research and Development, 540, Naruda Odawara-Shi, Kanagawa (JP); TOYODA, Ikuru c/o Division of Research and Development, 540, Naruda Odawara-Shi, Kanagawa (JP); NAKAOKA, Akemi c/o Division of Research and Development, 540, Naruda Odawara-Shi, Kanagawa (JP)
(74) Representative: HOFFMANN EITLE
(86) International application number: PCT/JP2005/021268
(87) International publication number: WO 2006/054707

(56) References cited:
- WO-A-03/090545
- WO-A-2004/052113
- WO-A1-2004/062376
- JP-A- 4 210 521
- JP-A- 6 054 648
- JP-A- 7 170 952

## Description

### Technical Field

The present invention relates to a process for producing cream which has characteristics of cream subjected to deoxidization treatment and having neither cooked smell resulting from heating sterilization nor unclear taste, has a rich taste or a strong flavor as cream, and has a good emulsion stability. In addition, the invention provides a process for producing a fatty food or a fat-containing food having a good flavor including using the cream as a raw material, and further provides cream which has an excellent flavor and physical properties, a fatty food or a fat-containing food having a good flavor, which are produced by the processes.

### Background Art

It has been known that, when a dissolved oxygen contained in liquid food is decreased and then thermal sterilization is performed, an oxidized smell generated during the thermal sterilization can be suppressed and the deterioration of a flavor during the preservation thereof becomes small, which provides a lot of benefits to foods. As a method of lowering a dissolved oxygen concentration contained in liquid food, a method of substituting a nitrogen gas or a carbonic acid gas, a method of performing a vacuum deaeration, a method of using enzyme or chemicals, a method of membrane separation, and the like have been carried out. A method of producing cream having a fresh flavor and no cooked smell by performing a deoxidization treatment before the thermal sterilization has been studied.

For example, a method of obtaining the cream having no cooked smell or unclear taste, in which an inert gas such as nitrogen is passed through cream to lower the dissolved oxygen concentration and then a defoaming treatment is performed, followed by performing the thermal sterilization, has been disclosed (see Patent Document 1).

Since the cream obtained by the above-mentioned method has less cooked smell or unclear taste and has a mild and plain flavor, the cream may be used in a product required to have such characteristics to give a good advantage.

In addition, as a method of performing a deoxidization treatment of food, there has been disclosed a method of combining deoxidization treatment with hollow fiber membrane and an inert gas treatment in a successive manner (see Patent Document 2).

In such a method, the deoxidization treatment by a membrane separation and an inert gas filling process are continuously combined, but the inert gas filling process is not aimed to play a role in an active deoxidization.

According to the process of the invention, there is a case in which both of a deoxidization process using a nitrogen substitution and a deoxidization process using a membrane are carried out in the end to lower the dissolved oxygen which has once increased, but there is no case in which two deoxidization processes are continuously performed without taking interval.
Patent Document 1: JP-A-2004-201601
Patent Document 2: JP-A-7-170952

### Disclosure of the Invention

### Problem that the Invention is to solve

According to the process of Patent Document 1, cream having a fresh flavor may be obtained. However, when a product required to have a rich taste and a milky taste inherent in cream is designed, the cream produced according to the process of Patent Document 1 may be inferior to the cream obtained by the conventional process in terms of an organolepic evaluation such as a rich taste or a milky flavor. It has been considered that a flavor contained in cream is partly removed through a deoxidization treatment.

The method of lowering dissolved oxygen concentration by dispersing an inert gas such as nitrogen, which is described in Patent Document 1, is inclined to deteriorate emulsion stability of cream due to the deoxidization treatment. In Patent Document 1, in order to prevent the emulsion stability from being deteriorated, when the inert gas passes through cream, the temperature of cream is adjusted to a predetermined temperature or more has been conducted. However, in order to produce a better cream, it is required to further improve the emulsion stability.

Accordingly, the first object of the invention is to produce cream not only having a fresh flavor without cooked smell or unclear taste, but also having a generally preferred flavor as cream such as a rich taste and a milky taste.

In addition, the second object of the invention is to find out a method of preventing the emulsion stability of cream from being deteriorated due to the deoxidization in a more effective manner to thereby improve the product quality.

The third object of the invention is to study the application of the cream according to the invention to various kinds of foods, and to examine food characteristics of various kinds of foods in the case of applying the cream according to the invention thereto.

### Means for solving the Problem

As a result of the extensive studies, as a first means for achieving the first object, it is found that, when milk used as a raw material of cream is concentrated in advance by a membrane treatment, and then a treatment of decreasing a dissolved oxygen concentration (hereinafter referred as deoxidization treatment), a cream separating treatment and a thermal sterilization treatment are carried out, it is possible to obtain the cream which has characteristics of a deoxidization-treated product having neither cooked smell nor unclear taste as well as having a milky taste and a rich taste, and consequently the cream is found to have an unprecedented good flavor without unclear taste and with a strong milky taste and rich taste.

As a second means for achieving the second object which is to secure the emulsion stability, it is found that an emulsion stability may be maintained irrespective of carrying out the deoxidization treatment either before the separation of the cream or after the separation of the cream, by using a membrane deoxidization treatment as the deoxidization treatment. In addition, even when a nitrogen substitution method is used as the deoxidization treatment, it is found that the emulsion stability may be maintained more than the conventional method by carrying out the deoxidization step, not after the separation of the cream, but before the separation of the cream.

As a third means for achieving the third object, it is found that fatty food and fat-containing food produced by using the cream of the invention as a raw material are good in flavor. For example, fat spread containing cream as the fatty food may have characteristics in which the cooked smell is prevented and a flavor such as a milky taste is good. In addition, it is found that the fat-containing food produced by using the cream of the invention as a raw material, such as pudding, has an excellent flavor in which the cooked smell of the yolk is prevented and the milky taste is strong.

### Advantage of the Invention

As described above, the cream obtained by the process of the invention has an advantage of having neither cooked smell nor unclear taste and having a fresh flavor due to a deoxidization treatment, and also has an excellent flavor and physical properties such as a good rich taste and strong milky taste, which the conventional cream does not have. In addition, the cream according to the invention is better in emulsion stability than the conventional deoxidization-treated cream and has better characteristics as cream product concerning distribution and storage (Example 1). Moreover, in fatty food or fat-containing food containing the cream according to the invention as a raw material, unpleasant smell such as cooked smell which is considered to be caused by raw food material other than cream is much prevented in comparison with in the food containing the conventional cream as a raw material. In addition, the fatty food or fat-containing food has a good flavor including a milky taste (Example 3).

### Brief Description of the Drawings

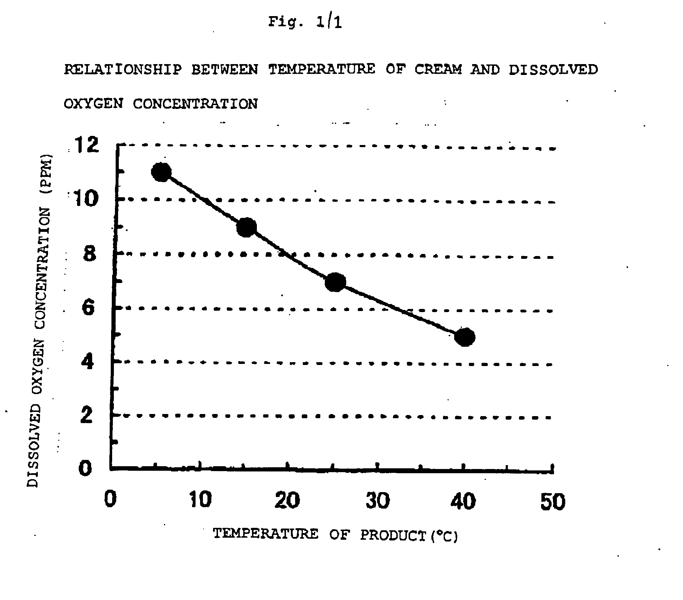

Fig. 1 is a diagram showing a relationship between a temperature of cream and a dissolved oxygen concentration.

### Best Mode for Carrying Out the Invention

Specifically, the invention relates to the following (1) to (12).
(1) A process for producing cream from milk, which comprises:
   carrying out a membrane concentration of the milk, then
   carrying out a separation of the cream from the milk, and then
   carrying out a pasteurization of the cream,
   said process further comprising decreasing a
      dissolved oxygen concentration in the milk before the separation of the cream.
(2) The process according to (1), wherein the dissolved oxygen concentration is decreased after the membrane concentration and before the separation of the cream.
(3) The process according to (1), wherein the dissolved oxygen concentration is decreased before the membrane concentration.
(4) The process according to any one of (1) to (3),
   wherein the dissolved oxygen concentration is decreased by a treatment with a deoxygenation membrane.
(5) The process according to any one of (1) to (3), wherein the dissolved oxygen concentration is decreased by a treatment with a nitrogen substitution.
(6) The process according to any one of (1) to (5),
   wherein the membrane concentration is carried out by using at least one member selected from the group consisting of RO membrane and NF membrane.
(7) The process according to any one of (1) to (6),
   wherein the dissolved oxygen concentration of the cream before the pasteurization is 4 ppm or less.
(8) The process according to any one of (1) to (7),
   wherein the milk is concentrated to 1.2 times or more according to the membrane concentration.
   produced by the process according to any one of (1) to (9) as a raw material, thereby lowering an unpleasant smell caused by a raw material other than the cream.
(9) A cream produced by the process according to any one of (1) to (8).
(10) Use of the cream as defined in (9) as a raw material for producing a fatty food or fat-containing food.

Hereinafter, embodiments of the invention will be described.

Milk used in the invention is not particularly limited and milk, special milk, goat milk, and the like of mammals can be used. In addition, in the invention, raw milk itself can be used, and milk processed within the extent that cream can be produced by the process according to the invention can be used. It is preferable that the raw milk is used in a membrane concentration treatment or a deoxidization treatment. Cream is obtained by separating the milk by the relative density difference, and it is preferable that the cream is obtained by carrying out the centrifugal treatment. Examples of the centrifugal treatment include a method of passing milk through a centrifugal machine to separate the milk to cream and skim milk. The milk fat ratio of the cream for coffee or cooking is generally in the range of 20 to 30%, the milk fat ratio for whipping cream used in making cakes and the like is in the range 40 to 50%, and other milk fat ratio can be also used depending on the applications.

As a pasteurization method (heating pasteurization) of cream, all the general pasteurization methods can be used, and specifically direct heating pasteurization methods (such as steam injection method and steam infusion method), indirect heating pasteurization methods (such as plate type pasteurization method and tubular type pasteurization method) can be performed. For example, a holding pasteurization method is performed at 63°c for 30 minutes, a plate type-heat exchange pasteurization can be performed at a temperature in the range of 72 to 75°C for 15 seconds, a high-temperature short-time pasteurization method (HTST sterilization method) can be performed at a temperature in the range of 82 to 85°C for 10 seconds, or an ultra high-temperature pasteurization method (UHT pasteurization method) can be performed at a temperature in the range of 130 to 140°C for 2 seconds. Generally, the cream is cooled at 10°C or less immediately after the pasteurization.

As the membrane used to carry out a membrane concentration treatment of milk which is used as a raw material of cream of the invention, reverse osmosis (RO) membrane or nano-filtration (NF) membrane can be used. In the case of ultra-filtration (UF) membrane, there are a lot of membrane permeation components such as lactose, so it is not employed in usual. However, ultra-filtration (UF) membrane has a merit of shortening concentration time more than other membrane, that with the smallest pore diameter can be used in the invention. The kind of the membrane selected affects a flavor of the finally obtained cream owing to the permeability of the membrane. For example, since only water is removed in RO membrane, salt is concentrated and therefore salty taste is generally stronger. An odor component or taste component is concentrated in the case of using NF, but water, potassium, sodium, and the like are removed, and therefore it is possible to prevent a salty taste from becoming strong. A pressure during carrying out the membrane concentration treatment is not specifically limited so long as the pressure is below a compressive strength of the membrane used. However, when milk, non-fat milk, or the like is treated, it is preferable that the treatment is carried out under about a pressure in range of 7 to 8 bar. In addition, a temperature during performing the membrane concentration treatment is not specifically limited so long as the temperature is below the heat-resistant temperature of the membrane to be used. However, when milk, non-fat milk, or the like is treated, it is preferable that the treatment is carried out at a temperature of 10°C or less, and more preferably in the range of 7 to 8°C.

Even though any of the above-mentioned membrane is used, it is required that the concentration ratio should be 1.2 times or more in order to make sure that the cream has a flavor better than non-processed one as shown in Table 3 of Test Example 1, and it is preferably required that the concentration ratio is 1.3 times or more. Herein, the concentration ratio is defined by an amount ratio of solid content in a predetermined amount of milk between ante-concentration and post-concentration. The upper limit of the concentration ratio is determined by a membrane capability, treatment efficiency in the process after the concentration, application of the cream, or the like, and there is no problem in the upper limit of the concentration even when several times concentration is performed. At this time, if the membrane capability of the concentration refers to the reference, the upper limit of the concentration ratio is up to 2 times or so. The membrane-concentrated milk obtained in this manner is what components such as milk protein, diacetyl, or the like determining a milky flavor are concentrated, even when any membrane is used. In particular, when the deoxidization is used together according to the invention, the membrane-concentrated milk can be used a raw material to obtain cream having an excellent flavor in which a milky flavor is stronger than the conventional cream and a good fresh flavor and no unclear taste are present, which does not exist before.

When the membrane deoxidization treatment is carried out as a deoxidization treatment method in the invention, a membrane having a permeability of gas, preferably a membrane having selective permeability of oxygen, may be used, and it is preferable that hollow fiber membrane and the like is used. Specifically, MHF (registered trademark) hollow fiber membrane (produced by Mitsubishi Rayon Co. Ltd.) and the like can be used. For example, by putting cream under a depressurization through the hollow fiber membrane, the deoxidization treatment can be carried out. The advantages of carrying out the deoxidization treatment by using membrane is that emulsion stability is scarcely deteriorated even after carrying out the deoxidization treatment after separation of cream and that the dispersion of aroma is inhibited in comparison with carrying out deoxidization treatment by nitrogen substitution. The deoxidization membrane can be reused after cleaning, but since the treatment capacity is large, it is possible to use the deoxidization membrane once and then throw it away in view of cost.

In the invention, the nitrogen substitution method refers to a method of decreasing the dissolved oxygen concentration in milk by bringing the milk into contact with nitrogen. A method including passing milk into the nitrogen atmosphere, a method including blowing nitrogen into milk, a method including pressurizing milk with bringing the milk into contact with nitrogen, or the like may be used. Specifically, it is possible to use the method of Patent Document 1 regarding to operation, condition, or the like (all the contents of Patent Document 1 are hereby incorporated by reference). Inert gases other than nitrogen can be applicable to the nitrogen substitution method used in the invention so long as such inert gases do not affect the property of cream. When the deoxidization treatment is carried out using the nitrogen substitution method, the emulsion stability is surely deteriorated in the case of carrying out the nitrogen substitution method after the separation of the cream, as described in Patent Document 1. For this reason, in Patent Document 1, the deterioration of the emulsion stability is prevented by controlling a temperature of cream to a predetermined temperature or higher during carrying out the nitrogen substitution method. In the invention, in the case that the nitrogen substitution method is carried out as the deoxidization treatment, the deoxidization treatment by the nitrogen substitution method is carried out on milk or membrane-concentrated milk before the separation of cream and is not carried out after the separation of cream. Accordingly, the deterioration of the emulsion stability becomes small and distribution ability becomes high in comparison with the method described in Patent Document 1. In this manner, it is possible to obtain cream which has further improved merchantability in comparison with the cream of Patent Document 1. The above-mentioned result is newly found in the invention.

Consequently, when the nitrogen substitution method is carried out as the deoxidization treatment according to the invention, the important point is that the nitrogen substitution method should be carried out before the separation of cream in terms of obtaining the cream having the improved emulsion stability. In addition, when the nitrogen substitution method is used, it is not necessary to prepare new equipments other than those described in Patent Document 1. Consequently, it is possible to obtain the cream having better emulsion stability than the cream of Patent Document 1 without additional cost.

According to the invention, it is possible to obtain the cream having an excellent flavor and physical properties, which is the object of the invention, by combining the membrane concentration of milk, the separation of cream from milk, the sterilization of the cream and the deoxidization treatment using the nitrogen substitution or the membrane.

Method 1: membrane concentration → deoxidization treatment (nitrogen substitution method) → separation of cream → sterilization

Method 2: membrane concentration → deoxidization treatment (membrane deoxidization) → separation of cream → sterilization

Reference Method 3: membrane concentration → separation of cream → deoxidization treatment (membrane deoxidization) → sterilization

Method 4: the deoxidization treatment (nitrogen substitution method) → membrane concentration → separation of cream → sterilization

Method 5: the deoxidization treatment (membrane deoxidization) → membrane concentration → separation of cream → sterilization

At any process, it is required that the dissolved oxygen concentration of the cream before the sterilization is 4 ppm or less at around the product temperature of 40°C, and preferably 3 ppm or less (Table 6 of Test Example 2). The dissolved oxygen concentration is a factor which varies depending on a temperature of the cream. However, it is possible to set the upper limit of the dissolved oxygen concentration of each temperature of the product required in the invention on the basis of, for example, the relationship between the temperature of the product and the dissolved oxygen concentration shown in Reference Example 1.

With reference to the foregoing 5 kinds the combinations of steps for carrying out the above-mentioned conditions, since the deoxidization treatment is carried out just before the sterilization like Patent Document 1 in the Reference Method 3, the dissolved oxygen concentration does not rise before the sterilization process, and thus there in no problem. Because of the above-mentioned reason, this is also carried out in the conventional method. Meanwhile, since the separation of the cream is carried out after the deoxidization treatment in Methods 1 and 2, there is a concern about the rise of dissolved oxygen in the step of the separation of cream. For this reason, Methods 1 and 2 are not used in Patent Document 1. However, even in these cases, when a separator which is good at keeping airtight is used to make nitrogen circumstance, it is confirmed that there is little rise of the dissolved oxygen concentration during the period from the deoxidization treatment to the sterilization treatment. Consequently, it is possible to improve the emulsion stability more than the conventional method by performing Method 1 or 2. In particular, when the nitrogen substitution method is used as the deoxidization method, the emulsion stability is considerably improved and clearly improved than the method of Patent Document 1 based on Reference Method 3 (Table 1 of Example 1) .

In the remaining Methods 4 and 5, it is required to further suppress the rise of the dissolved oxygen at the step of membrane concentration, in comparison with Methods 1 and 2. However, like the foregoing Methods 1 and 2, by maintaining the dissolved oxygen concentration of cream to the foregoing standard with keeping in mind the airtight of the equipment and the like, the invention can be realized.

In this regard, only one deoxidization treatment step is described in the foregoing Methods 1, 2, 4 and 5 and Reference Method 3. In order to maintain the emulsion stability, it is preferable that the deoxidization treatment is performed only once. However, when there is a special reason that respective steps cannot be carried out continuously and the dissolved oxygen concentration may rise before the sterilization treatment, it is possible to embody the invention in the manner that the deoxidization process is appropriately added without affecting the emulsion stability by using membrane deoxidization method which is rather relieved method, to thereby decreasing the raised dissolved oxygen concentration again. For example, when the steps are carried out to the separation of the cream in order to enhance handling for transportation and then the sterilization step is carried out after the transportation, the dissolved oxygen concentration of the cream may rise during the distribution. However, by carrying out membrane deoxidization treatment before the heating sterilization, it is possible to obtain the cream according to the invention.

The operations carried out in the foregoing Methods 1 and 2 will be described below.

A circular flow passage, in which a membrane module having a tank, a pump, concentrating membrane therein and a cooling plate are arranged in series, is constituted. Milk is circulated in the flow passage to obtain concentrated milk.

Method 1: Next, a nitrogen gas is infused to the concentrated milk by using conventional gas-liquid dispersion device, and then the concentrated milk is lead to a defoaming tank to be defoamed. The concentrated milk thus defoamed and deoxidized is heated to about 30°C to 50°C by a plate-type heating device and it is subjected to separation by a separating device to obtain cream. The obtained cream is sterilized, for example, at 140°C for 2 seconds by a plate-type sterilizer. After the sterilization, the cream is aged overnight.

Method 2: While the inside of the housing in which the deoxidization membrane is housed is kept under a low pressure, the membrane-concentrated milk is passed therethrough. The deoxidized milk is subjected to separation by a cream separator to obtain cream. The obtained cream is sterilized, for example, at 140°C for 2 seconds by a plate-type sterilizer. After the sterilization, the cream is aged overnight.

The cream thus obtained according to the invention can be used in various fatty food or fat-containing food. For example, fatty food such as fat spread and cooking oil and fat for bakery and confectionery, and fat-containing food such as compound cream, custard cream and pudding may be mentioned. In particular, in the case of food containing a raw material other than cream such as egg or fish, which tends to generate a cooked smell or unpleasant smell, or oil with flavor of which the flavor is easily deteriorated by heat such as fish oil or egg yolk, the cooked smell, the fishy smell, or the like derived from egg, fish or oil with flavor is clearly suppressed along with the cream. Consequently, it is possible to produce food with a fresh flavor. In this manner, not only the flavor inherent in the cream passively contribute to the flavor of food, but also when the cream according to the invention is used, the cooked smell or the unpleasant smell such as the fishy smell otherwise caused due to the raw material other than the cream can be suppressed. Consequently, it is possible to obtain food having a fresh flavor and a rich cream flavor, which is a new unprecedented flavor. This is achieved for the first time, by using, as a raw material, the cream of the invention which is produced by using the membrane concentrated milk as a material and carrying out deoxidization treatment before the separation of the cream.

Hereinafter, the invention will be described with reference to Examples, Test Examples and Reference Example. However, the invention is not limited thereto.

### Examples

### (Example 1)

Membrane Concentration of Raw Milk (NF Membrane), Deoxidization Treatment (Nitrogen Substitution), Cream Separation, and Sterilization Treatment

267 kg of the concentrated milk (fat of 5.6%, SNF of 13.4%) was obtained by circulating 400 kg of raw milk (fat of 3.7%, SNF of 8.9%) using NF membrane (Dow-filmtech firm: NFT 3838) treatment equipment. The concentrated milk was sent to an air dispersion pipe by a mono-pump at a rate of 100 L/H while a nitrogen gas was dispersed at a ratio of 8 L/min. The processed liquid was heated by a plate-type heating device to 47°C, and cream was separated from the processed liquid at 7,000 rpm and at ratio of 100 kg/h by using a cream separator (Westfalia Co.: SA-1 type). The dissolved oxygen concentration of the cream obtained was 1.7 ppm. The cream was sterilized by a plate-type sterilizer (IWAI KIKAI KOGYO CO., LTD.: VHX-CR2-200) at 140°C for 2 seconds. The sterilized cream (fat of 47.5%, SNF of 7.0%) was aged at 3°C for one night. In addition, using the membrane concentrated milk, a product was prepared by the method of Patent Document 1 with carrying out nitrogen substitution after the separation of cream (referred to as Product (4)).

The emulsion stability of the cream is shown as a ratio with respect to a time in which the reference cream produced without carrying out the membrane concentration process nor deoxidization coagulates which is set to be 100, when the 100 g of cream is put in a 200 ml beaker and shaken at a rate of 120 rpm at 25°C. The results were shown in Table 1. In Table 1, the emulsion stability of Product (3) of the invention was a little more than 80% of Reference (1), and thus there was no problem in practical use. Meanwhile, the emulsion stability of Product (4) was a little less than 70% of Reference (1). When 28 g of sugar was added to 400 g of each cream and whipped, Product (3) of the invention had a strong and rich milky taste and had little cooked smell and a good flavor such as bland aftertaste, in comparison with reference product.

**Table 1**

| Experiment No. | (1) | (2) | (3) | (4) |
|---|---|---|---|---|
| Membrane concentration treatment | No | Yes | Yes | Yes |
| Deoxidization treatment (Nitrogen substitution) | No | No | Yes (Method of the invention) | Yes (Conventional method) |
| Emulsion stability (%) | 100 | 104 | 83 | 68 |
| Cooked smell | Yes | Yes | Weak | Weak |
| Rich taste | Weak | Strong | Strong | Strong |
| Comprehensive evaluation | Δ | ○ | ⊚ | ○ |

| | | | | |
|---|---|---|---|---|
| ⊚: good ○: fairly good Δ: normal | | | | |

### (Reference Example 2)

### Membrane Concentration of Raw Milk (RO Membrane), Deoxidization Treatment (Membrane deoxidization), Cream Separation, and Sterilization Treatment

Concentrated milk (fat of 5.9%, SNF of 13.2%) was obtained by circulating raw milk using RO membrane (Dow-filmtech firm: R08038) treatment device. The processed liquid was heated by a plate-type heating device to 47°C, and cream was separated from the processed liquid at 7,000 rpm and at ratio of 100 kg/h by using a separator (Westfalia Co.: SA-01) to obtain 5 kg of cream having a fat ratio of 45%. The cream was accumulated in a tank and heated at 40°C by flowing hot water to a jacket. Keeping the inside part of housing mounting a deaeration element (MITSUBISHI RAYON CO., LTD.; MHF304KM) under 40 torr, the heated cream was sent to the element by a mono-pump at a rate of 100 L/H to carry out the deoxidization treatment. The dissolved oxygen concentration of the cream obtained was 1.3 ppm. The deoxidization-treated cream was sterilized by a plate-type sterilizer (IWAI KIKAI KOGYO CO.,LTD.: VHX-CR2-200) at 140°C for 2 seconds. The sterilized cream was aged at 3°C for one night. 28 g of sugar was added to 400 g of the cream, and the cream was whipped. The flavor of the cream was compared to that of Reference Product (1) produced without the membrane concentration nor deoxidization treatment. As a result of the comparison, the cream had a good flavor such as a strong milky taste and little cooked smell as shown in Table 2. In addition, the emulsion stability of the deoxidization-treated product was above 80% of the reference product produced without treatments, and thus there was no problem in practical use.

**Table 2**

| Experiment No. | (1) | (2) |
|---|---|---|
| Membrane concentration treatment | No | Yes |
| Deoxidization treatment (Membrane) | No | Yes |
| Emulsion stability (%) | 100 | 85 |
| Cooked smell | Yes | No |
| Milky taste | Normal | Strong |

### (Test Example 1)

### Examination on a relationship between a degree of membrane concentration of raw milk and a cream flavor

By using the same method as Example 1, several types of milk of which the concentrations are different were obtained with time lapsed by circulating raw milk (fat of 4.2%, SNF of 8.8%) using NF membrane (Dow-filmtech firm: NFT3838) treatment device. Each of the concentrated milk was sent to an air dispersion pipe by a mono-pump at a rate of 100 L/H, while a nitrogen gas was dispersed at a ratio of 8 L/min. The processed liquid was heated by a plate-type heating device to 47°C, and cream was separated from the processed liquid at 7,000 rpm and at ratio of 100 kg/h by using a separator (Westfalia Co.: SA-01). Sequentially, the cream was sterilized by a plate-type sterilizer (IWAI KIKAI KOGYO CO.,LTD.: VHX-CR2-200) at 140°C for 2 seconds. The sterilized cream was aged at 3°C for one night.

28 g of Sugar was added to 400 g of the cream and whipped, and then the flavor of the cream was compared to that of Reference Product. The results were shown in Table 3. As a result, the product having the 1.1 times concentration ratio felt no difference between the reference, or rather plain flavor. However, the products having the 1.2 times or more concentration ratio had a rich milky flavor, and the products having the 1.3 times or more concentration ratio had a stronger milky flavor. Moreover, the cream had little cooked smell or unclear taste and had a good flavor with strong body and fresh aftertaste.

**Table 3**

| Experiment No. | (1) | (2) | (3) | (4) | (5) |
|---|---|---|---|---|---|
| Ratio of raw milk concentration (times) | 1.0 | 1.1 | 1.2 | 1.3 | 1.4 |
| Fat ratio of separated cream (%) | 47.5 | 47.5 | 47.5 | 47.5 | 47.5 |
| Non-fat milk solid of separated cream (%) | 4.6 | 5.1 | 5.6 | 6.1 | 6.6 |
| Flavor | Normal | Normal | Fairly good | Good | Good |

### (Example 3)

### Preparation of fat Spread (Fatty food)

The cream obtained in Example 1 was used as a secondary raw material and mixture liquid in which Sanomega DHA23 (registered trademark: NOF Corporation., hereinafter referred to as DHA oil) containing 5.8% of DHA and EPA combined, which contain polyunsaturated fatty acids, was mixed was prepared as the following recipe. The prepared liquid was heated to 95°C, and then cooled to 40°C. The prepared liquid was cooled and scraped out from a drum cooler to obtain fat spread. A spread was obtained from the reference cream as well. As a result of comparing both the spreads, the unpleasant cooked smell caused by a degradation in the polyunsaturated fatty acids and the like is less and the milky flavor is stronger in the fat spread obtained using the cream according to the invention than in the reference product. Accordingly, the cream according to the invention had a good flavor.

Recipe: 35% of rapeseed oil, 20% of DHA oil, 15% of edible refined and processed fat (m.p. 40°C), 28% of cream, 1% of table salt, and 1% of emulsifying agent, namely 100% in total.

### (Reference Example 4)

### Preparation of Steamed Pudding (Smell Reduction of Egg Yolk)

The cream and the reference cream obtained in Reference Example 2 were used as a secondary ingredient. The raw materials were mixed at the following recipe and then heated and dissolved. Then 80 g of the mixture was filled in a desert cup having heat resistance property, heated with steam in an electric oven (upper heating of 150°C and lower heating of 160°C) for 60 minutes, and cooled outside to be a test sample of sensory evaluations.

Recipe: 20% of sugar, 25% of egg yolk, 5% of sugar, 45% of milk, and 25% of cream, namely 100% in total.

Table 4 shows the results of the sensory evaluation in which 20 skilled panelists sampled the reference product and the product containing creams obtained in Reference Example 2 (where the number in Table represents the numbers of panelist).

**Table 4 Steamed Pudding (fat-containing food) (with respect to the reference product**

| Evaluation | Smell of egg yolk | | | Evaluation | Flavor of custard | | |
|---|---|---|---|---|---|---|---|
| | Test 1 | Test 2 | Test 3 | | Test 1 | Test 2 | Test 3 |
| Strong | 5 | 2 | 2 | Good | 9 | 8 | 10 |
| No difference | 2 | 3 | 2 | No difference | 8 | 5 | 7 |
| Weak | 13 | 15 | 16 | Poor | 3 | 7 | 3 |

It was confirmed that the product obtained by using the cream of Reference Example 2 has less smell of egg yolk and a stronger flavor of the custard than the reference product containing the reference cream.

### (Reference Example 5)

### Preparation of Bean curd Bavarois (reduced Soybean Smell)

The cream and the reference cream obtained in Reference Example 2 were used as a secondary raw material. The raw materials were mixed at the following ratio and heated, and then cooled to a temperature at which gelling starts (the range of 18 to 20°C). A small amount of sugar is added in fresh cream and whipped at about 60% of overrun, mixed with the former, filled in a desert cup by 80 g, cooled in a refrigerator to be a test sample of sensory evaluations.

Recipe: 15% of bean curd, 10% of egg yolk, 15% of sugar, 38.2% of milk, 1.8% of gelatin, and 20% of cream, namely 100% in total.

The results are shown in Table 5.

**Table 5 Bean Curd Bavarois (fat-containing food) (with respect to the reference product)**

| Evaluation | Smell of bean curd | | | Evaluation | Aftertaste | | |
|---|---|---|---|---|---|---|---|
| | Test 1 | Test 2 | Test 3 | | Test 1 | Test 2 | Test 3 |
| Strong | 0 | 4 | 3 | Good | 12 | 15 | 14 |
| No difference | 0 | 0 | 1 | No difference | 0 | 1 | 1 |
| Weak | 20 | 16 | 16 | Poor | 8 | 4 | 5 |

It was confirmed that the product obtained by using the cream of Reference Example 2 has much less smell of bean and a better aftertaste than the reference product containing the reference cream.

### (Test Example 2)

### Examination on the relationship between a dissolved oxygen concentration of cream derived from concentrated milk and a cooked smell of cream

Raw milk (fat of 4.2%, SNF of 8.8%) was circulated by an NF membrane (Dow-filmtech Co.: NFT3838) processing device to obtain concentrated milk. The concentrated milk was sent to an air dispersion pipe by a mono-pump at a rate of 100 L/H, while a nitrogen gas was dispersed at a ratio in the range of 0 to 8 L/min. Sequentially, cream was separated from each processed liquid, heated and sterilized, and aged at 3°C for one night. Table 6 shows the relationship between the dissolved oxygen concentration of cream just before the heating sterilization treatment and the cooked smell of the cream after the aging.

**Table 6**

| Experiment No. | (1) | (2) | (3) | (4) |
|---|---|---|---|---|
| Volume of nitrogen dispersed (L/min) | 0 | 1.0 | 3.8 | 7,9 |
| Product temperature (°C) | 40 | 40 | 40 | 40 |
| Dissolved oxygen concentration (ppm) | 5 | 4 | 3 | 2 |
| Cooked smell | Present | Rather weak | Weak | Weak |

According to the cream derived from membrane concentrated milk of the invention, it was confirmed that a cooked smell is decreased when the dissolved oxygen concentration is 4 ppm or less.

### (Reference Example)

### Relationship between the temperature of a cream and a dissolved oxygen concentration

Cream in the experiment No. (1) of Table 6 was cooled in the cool water bath. The results of measuring the temperature of cream and the dissolved oxygen concentration at the temperature are shown in Fig. 1.

While the invention has been described in detail and with reference to specific embodiments thereof, it will be apparent to one skilled in the art that various changes and modifications can be made therein without departing from the spirit and the scope thereof.

This application is based on Japanese patent application No. 2004-335455 filed November 19, 2004, the entire contents thereof being hereby incorporated by reference.

### Industrial Applicability

The cream obtained by the process of the invention has an advantage of having neither cooked smell nor unclear taste and having a fresh flavor due to a deoxidization treatment, and also has an excellent flavor and physical properties such as a good rich taste and strong milky taste, which the conventional cream does not have. In addition, the cream according to the invention is better in emulsion stability than the conventional deoxidization-treated cream and has stronger distribution and storage characteristics. Moreover, in fatty food or fat-containing food containing the cream according to the invention as a raw material, unpleasant smell such as cooked smell which is considered to be caused by food raw material other than cream is much prevented in comparison with in the food containing the conventional cream as a raw material. In addition, the fatty food or fat-containing food has a good flavor including a milky taste.

## Claims

1. A process for producing cream from milk, which comprises:
carrying out a membrane concentration of the milk, then
carrying out a separation of the cream from the milk, and then
carrying out a pasteurization of the cream,
said process further comprising decreasing a dissolved oxygen concentration in the milk before the separation of the cream.

2. The process according to claim 1, wherein the dissolved oxygen concentration is decreased after the membrane concentration and before the separation of the cream.

3. The process according to claim 1, wherein the dissolved oxygen concentration is decreased before the membrane concentration.

4. The process according to any one of claims 1 to 3,
wherein the dissolved oxygen concentration is decreased by a treatment with a deoxygenation membrane.

5. The process according to any one of claims 1 to 3,
wherein the dissolved oxygen concentration is decreased by a treatment with a nitrogen substitution.

6. The process according to any one of claims 1 to 5,
wherein the membrane concentration is carried out by using at least one member selected from the group consisting of RO membrane and NF membrane.

7. The process according to any one of claims 1 to 6,
wherein the dissolved oxygen concentration of the cream before the pasteurization is 4 ppm or less.

8. The process according to any one of claims 1 to 7,
wherein the milk is concentrated to 1.2 times or more according to the membrane concentration.

9. A cream produced by the process according to any one of claims 1 to 8.

10. Use of the cream as defined in claim 9 as a raw material for producing a fatty food or fat-containing food.

## Patentansprüche

1. Verfahren zur Herstellung von Rahm aus Milch, umfassend:
Durchführen einer Membrankonzentration der Milch, dann
Durchführen einer Trennung des Rahms von der Milch, und
dann
Durchführen einer Pasteurisierung des Rahms,
wobei das Verfahren weiterhin das Verringern einer Konzentration des gelösten Sauerstoffs in der Milch vor dem Abtrennen des Rahms umfasst.

2. Verfahren gemäß Anspruch 1, worin die Konzentration des gelösten Sauerstoffs nach der Membrankonzentration und vor der Abtrennung des Rahms verringert wird.

3. Verfahren gemäß Anspruch 1, worin die Konzentration des gelösten Sauerstoffs vor der Membrankonzentration verringert wird.

4. Verfahren gemäß irgendeinem der Ansprüche 1 bis 3, worin die Konzentration des gelösten Sauerstoffs durch eine Behandlung mit einer Deoxygenierungsmembran verringert wird.

5. Verfahren gemäß irgendeinem der Ansprüche 1 bis 3, worin die Konzentration des gelösten Sauerstoffs durch eine Behandlung mit einer Stickstoffersetzung verringert wird.

6. Verfahren gemäß irgendeinem der Ansprüche 1 bis 5, worin die Membrankonzentration durch Verwendung mindestens eines Elements ausgewählt aus der Gruppe bestehend aus einer RO-Membran und einer NF-Membran durchgeführt wird.

7. Verfahren gemäß irgendeinem der Ansprüche 1 bis 6, worin die Konzentration des gelösten Sauerstoffs im Rahm vor der Pasteurisierung 4 ppm oder weniger ist.

8. Verfahren gemäß irgendeinem der Ansprüche 1 bis 7, worin die Milch durch die Membrankonzentration auf das 1,2-fache oder mehr konzentriert wird.

9. Rahm, hergestellt durch das Verfahren gemäß irgendeinem der Ansprüche 1 bis 8.

10. Verwendung des Rahms gemäß Anspruch 9 als Rohmaterial zur Herstellung eines Fett-Lebensmittels oder eines fetthaltigen Lebensmittels.

## Revendications

1. Procédé pour produire de la crème à partir de lait, qui comprend les opérations consistant à :
effectuer une concentration sur membrane du lait, puis
effectuer une séparation de la crème à partir du lait, et ensuite
effectuer une pasteurisation de la crème,
ledit procédé comprend en outre la diminution de la concentration d'oxygène dissous dans le lait avant la séparation de la crème.

2. Procédé selon la revendication 1, dans lequel la concentration d'oxygène dissous est diminuée après la concentration sur membrane et avant la séparation de la crème.

3. Procédé selon la revendication 1, dans lequel la concentration d'oxygène dissous est diminuée avant la concentration sur membrane.

4. Procédé selon l'une quelconque des revendications 1 à 3, dans lequel la concentration d'oxygène dissous est diminuée par un traitement avec une membrane de désoxygénation.

5. Procédé selon l'une quelconque des revendications 1 à 3, dans lequel la concentration d'oxygène dissous est diminuée par un traitement avec une substitution par l'azote.

6. Procédé selon l'une quelconque des revendications 1 à 5, dans lequel la concentration sur membrane est effectuée par utilisation d'au moins un membre du groupe constitué par une membrane RO et une membrane NF.

7. Procédé selon l'une quelconque des revendications 1 à 6, dans lequel la concentration d'oxygène dissous dans la crème avant la pasteurisation est de 4 ppm ou moins.

8. Procédé selon l'une quelconque des revendications 1 à 7, dans lequel le lait est concentré 1,2 fois ou plus en fonction de la concentration sur membrane.

9. Crème produite par le procédé selon l'une quelconque des revendications 1 à 8.

10. Utilisation de la crème telle que définie dans la revendication 9 en tant que matière première pour produire un aliment gras ou un aliment contenant des matières grasses.
